# EUROPEAN PATENT APPLICATION

(11) **EP 2 716 410 A2**
(43) Date of publication of application: **09.04.2014**
(21) Application number: 13004790.5
(22) Date of filing: 04.10.2013
(51) Int. Cl.: B25F 5/00

(54) **Power tool**

(30) Priority: 05.10.2012 JP 2012222918
(71) Applicant: Makita Corporation, Anjo-shi, Aichi 446-8502 (JP)
(72) Inventor: Hirabayashi, Shinji, Anjo-shi, Aichi, 446-8502 (JP); Ichikawa, Yoshitaka, Anjo-shi, Aichi, 446-8502 (JP)
(74) Representative: Müller-Boré & Partner Patentanwälte PartG mbB

(57) **Abstract**

A chain saw (100) as a power tool comprises a combustion engine (111) and an electric motor (141). The chain saw (100) has a driving shaft (131) which drives a saw chain (105), a battery pack (137) which provides electric current to the electric motor (141), and a controller (139) which is connected to the battery pack (137). In the chain saw (100), both the combustion engine (111) and the electric motor (141) drive the driving shaft (131) so that the driving shaft (131) drives the saw chain (105) . Further, the controller (139) controls a driving of the electric motor (141) based on a remaining capacity of the battery pack (137).

## Description

The invention relates to a power tool which drives a tool and performs a predetermined operation.

### Description of the Related Art:

Japanese Laid-Open Patent Application Publication No. 2011-244724 discloses a brush cutter which has an engine and a motor. The brush cutter drives a blade by means of the engine or the motor respectively by switching the engine and the motor which are provided as driving sources.

### Statement of Invention:

In the brush cutter described above, the engine and the motor which are provided as driving sources are driven independently to each other. That is, when one driving source is driven, the other driving source stops driving operation. Accordingly, for a user of such brush cutter, when one driving source is driven, the other driving source is unnecessary in terms of an operation against a workpiece.

An object of the invention is, in consideration of the above described problem, to rationalize a driving of a power tool which has an engine and a motor.

Above-mentioned object is achieved by an invention of claim 1. According to a preferable aspect of the invention, a power tool comprises an engine, a motor, a driving shaft which drives a tool bit, a battery which provides electric current to the motor, and a controller which controls a driving of the motor. Both the engine and the electric motor drive the driving shaft so that the driving shaft drives the tool bit. The tool bit is typically defined by a tool such as a hammer bit, a drill bit, a blade, a saw chain and so on, which is detachably attached to the power tool and the attached tool performs a predetermined operation on a workpiece. Further, the controller controls the driving of the motor based on a remaining capacity of the battery. Typically, the engine is represented by a combustion engine, and the motor is represented by an electric motor.

According to this aspect, the controller controls the motor based on the remaining capacity of the battery. Accordingly, in the power tool capable of driving the tool bit in a hybrid driving in which both the engine and the motor drive the driving shaft, a rational driving based on the remaining capacity of the battery is achieved.

A further aspect may be preferably provided as the controller includes a first driving mode in which the motor drives the driving shaft, and a second driving mode in which the motor functions as a generator and charges the battery as the generator. Further, the controller selects from the first driving mode and the second driving mode based on the remaining capacity of the battery, and controls the driving of the motor in the selected driving mode.

According to this aspect, the first driving mode and the second driving mode are switched based on the remaining capacity of the battery. That is, the motor is switched to function as a generator based on the remaining capacity of the battery. Accordingly, the power tool can perform a rational driving based on the remaining capacity of the battery.

A further aspect may be preferably provided as in a state that the remaining capacity of the battery is not less than a first threshold, the controller selects the first driving mode and controls the motor so that the motor drives the driving shaft in the first driving mode. Further, in a state that the remaining capacity of the battery is less than the first threshold, the controller selects the second driving mode and controls the motor so that the motor charges the battery in the second driving mode.

According to this aspect, in a state that the remaining capacity of the battery is relatively much, the motor drives the driving shaft. On the other hand, in a state that the remaining capacity of the battery is relatively less, the battery is charged by the motor. That is, the power tool is rationally driven based on the remaining capacity of the battery.

A further aspect may be preferably provided as the controller further includes a third driving mode in which the motor drives the driving shaft in a compression stroke in which a piston of the engine moves toward the top dead point in one engine cycle and the motor functions as the generator in other stroke than the compression stroke in one engine cycle. Further, in a state that the remaining capacity of the battery is not less than a second threshold which is larger than the first threshold, the controller selects the first driving mode and controls the motor. Further, in a state that the remaining capacity of the battery is not less than the first threshold and less than the second threshold, the controller selects the third driving mode and controls the motor.

According to this aspect, in the third driving mode, the motor drives the driving shaft and also the motor functions as a generator. Especially, in a state that the remaining capacity of the battery is intermediate, the motor is more rationally driven.

A further aspect may be preferably provided as the power tool comprises an informing mechanism which informs a driving mode in which the motor is driven, the driving mode being selected from the first to the third driving modes by the controller. The informing mechanism preferably utilizes light, sound, vibration and so on to inform the driving mode to the outside of the power tool.

According to this aspect, the selected driving mode based on the remaining capacity of the battery is informed to a user.

According to the invention, a driving of a power tool is optimized, and thereby the power tool is rationally driven.
Other objects, features and advantages of the invention will be readily understood after reading the following detailed description together with the accompanying drawings and the claims.

### Brief Description of the Drawings:

Fig. 1 shows a side view of a power tool according to a preferred embodiment.
Fig. 2 shows a cross-sectional view taken from line II-II of Fig. 1.
Fig. 3 shows a block diagram of a drive system of the power tool.

### Detailed Description of the Invention:

Each of the additional features and method steps disclosed above and below may be utilized separately or in conjunction with other features and method steps to provide and manufacture improved power tools and method for using such the power tools and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

### (First embodiment)

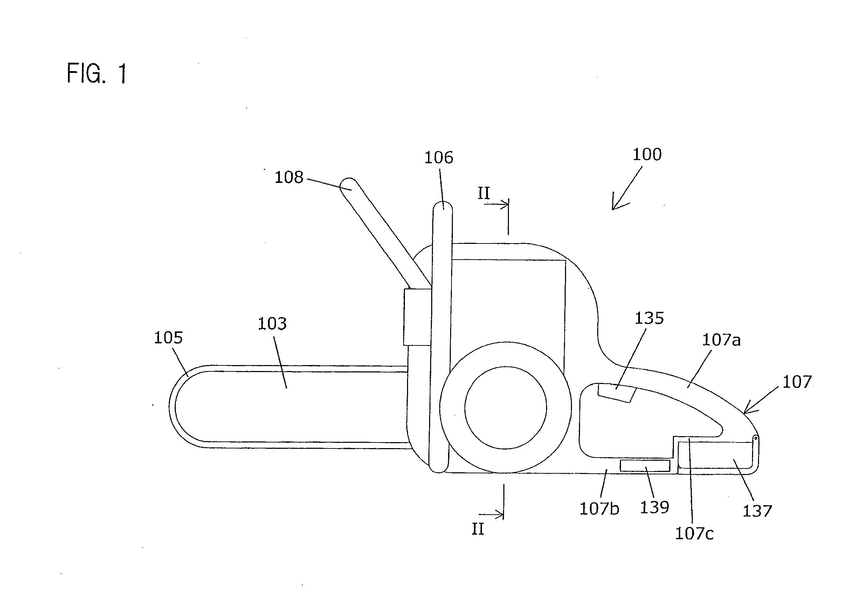

A first embodiment is explained with reference to Fig. 1 to Fig. 3. This embodiment is one example of a power tool applied to a chain saw 100. As shown in Fig. 1, the chain saw 100 is mainly provided with a main housing 101, a guide bar 103, a front handle 106, a rear handle 107 and a hand guard 108. Hereinafter, the guide bar 103 side of the chain saw 100 (left-hand side of Fig. 1) is called a front side, and the rear handle 107 side of the chain saw 100 (right-hand side of Fig. 1) is called a rear side.

The main housing 101 forms a main body as an outline of the chain saw 100. The guide bar 103 is arranged on the main housing 101 so as to protrude forward from the main housing 101. A saw chain 105 is detachably attached on an outer periphery of the guide bar 103. The attached saw chain 105 is driven along the outer periphery of the guide bar 103, and thereby a cutting operation in which the saw chain 105 cuts a workpiece is performed.

The front handle 106 and the hand guard 108 are connected to the main housing 101 at a front side region of the chain saw 100. The rear handle 107 is connected to the main housing 101 at a rear side region of the chain saw 100. The chain saw 100 is adapted to perform a cutting operation in a state that a user holds the front handle 106 and the rear handle 107.

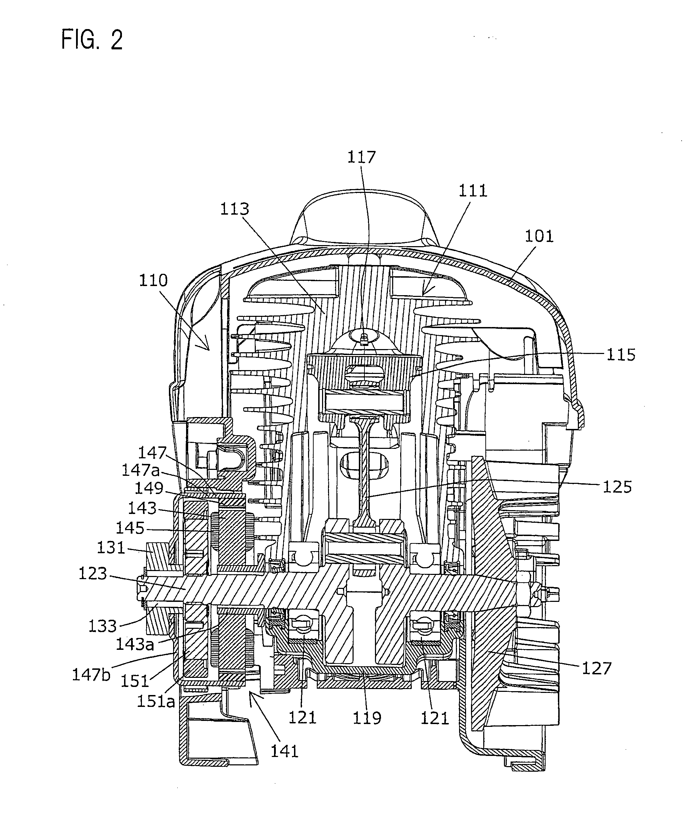

As shown in Fig. 2, a driving mechanism 110 is housed in the main housing 101. The driving mechanism 110 is mainly provided with an combustion engine 111 and an electric motor 141. In the driving mechanism 110, both output power of the combustion engine 111 and the electric motor 141 are transmitted to the saw chain 105 via a driving shaft 131. That is, the chain saw 100 is provided as a hybrid power tool driven by two different kinds of driving sources of the combustion engine 111 and the electric motor 141.

The combustion engine 111 is provided as a reciprocating engine, which is mainly provided with a cylinder 113, a piston 115, a spark plug 117, a crank case 119, a crank shaft 123 and a connecting rod 125. The piston 115 is slidably arranged within the cylinder 113. The spark plug 117 is arranged above the piston 115 within the cylinder 113. The crank case 119 is arranged under the cylinder 113 so as to connect to the cylinder 113. The crank shaft 123 is rotatably supported by a bearing 121 and arranged within the crank case 119. The connecting rod 125 is arranged so as to connect the piston 115 and the crank shaft 123. The combustion engine 111 is one example of a feature corresponding to "an engine" of the invention.

The crank shaft 123 is arranged so as to extend in a horizontal direction which crosses an extending direction (a lateral direction of Fig. 1) of the guide bar 103. One end side (left side of Fig. 2) of the crank shaft 123 is protruded outward from the main housing 101. The driving shaft 131 is attached at a protruding region of the crank shaft 123 via a needle bearing 133, the driving shaft 131 being relatively rotatable against the crank shaft 123.

A fly wheel 127 is attached on the other end side of the crank shaft 123 (right hand side of Fig. 2) so as to rotate integrally with the crank shaft 123. On the fly wheel 127, a recoil starter (not shown) is attached via a coupling. Accordingly, by operating the recoil starter, a user is able to start the combustion engine 111. The recoil starter 127 is also called a manual starter or a pull starter. Further, a starter switch (not shown) may be provided on the chain saw 100. In such aspect, when the starter switch is operated, the electric motor 141 functions as a starter motor, and thereby the combustion engine 111 is started by the electric motor 141.

The electric motor 141 is provided as an outer rotor motor, and arranged coaxially with the crank shaft 123. The electric motor 141 is mainly provided with a stator core 143, a stator coil 145, an outer rotor 147 and a magnet 149. The stator core 143 is a disk-shaped member which is made of a magnetic material. The stator core 143 is fixed on an outer surface of the cylinder 113 and the crank case 119 via a sleeve 143a. That is, the crank shaft 123 is inserted into the sleeve 143a, and thereby the crank shaft 123 is rotatable against the fixed stator core 143. The stator coil 143 is wound on the stator core 143, and the stator core 143 is excited when current is provided to the stator coil 145.

The outer rotor 147 is a cup-shaped member which has a cylindrical side wall 147a and a bottom wall 147b. The side wall 147a is arranged so as to surround the stator core 143. The magnet 149 is arranged on an inner surface of the side wall 147a so as to face an outer surface of the stator core 143. The crank shaft 123 penetrates the bottom wall 147a and the bottom wall 147a is fixed to the driving shaft 131. That is, the outer rotor 147 of the electric motor 141 is directly connected to the driving shaft 131, and thereby rotation of the electric motor 141 is transmitted to the driving shaft 131. Further, a position sensor (not shown). which detects a position of the outer rotor 147 is provided outside the outer rotor 147. The position sensor is adapted to detect the position of the outer rotor 147 at three points in a circumference direction of the outer rotor 147. The electric motor 141 is one example of a feature corresponding to "a motor" of the invention.

A centrifugal clutch 151 is arranged between the crank shaft 123 and the outer rotor 147 so as to rotate integrally with the crank shaft 123. In the centrifugal clutch 151, a clutch shoe 151a is moved outward in a radial direction of the centrifugal clutch 151 by a centrifugal force caused by rotation of the crank shaft 123, and thereby the clutch shoe 151a contacts with the inner surface of the side wall 147a. Accordingly, the centrifugal clutch 151 transmits rotation of the crank shaft 123 to the outer rotor 147. That is, in a state that a rotation speed of the crank shaft 123 is not faster than a predetermined threshold, rotation of the crank shaft 123 is not transmitted to the outer rotor 147. On the other hand, in a state that the rotation speed of the crank shaft 123 is faster that the threshold, rotation of the crank shaft 123 is transmitted to the outer rotor 147.

As shown in Fig. 1, the rear handle 107 is provided with an upper side portion 107a, a lower side portion 107b and a battery attached portion 107c. The rear handle 107 is formed so as to protrude rearward from the main housing 103. A throttle lever 135 and a controller 139 are arranged at the rear handle 107. A battery pack 137 is detachably attached to the battery attached portion 107c of the rear handle 107. The battery pack 137 stores electricity for driving the electric motor 141. Accordingly, the electric motor 141 is electrically driven. The battery pack 137 is one example of a feature corresponding to "a battery" of the invention.

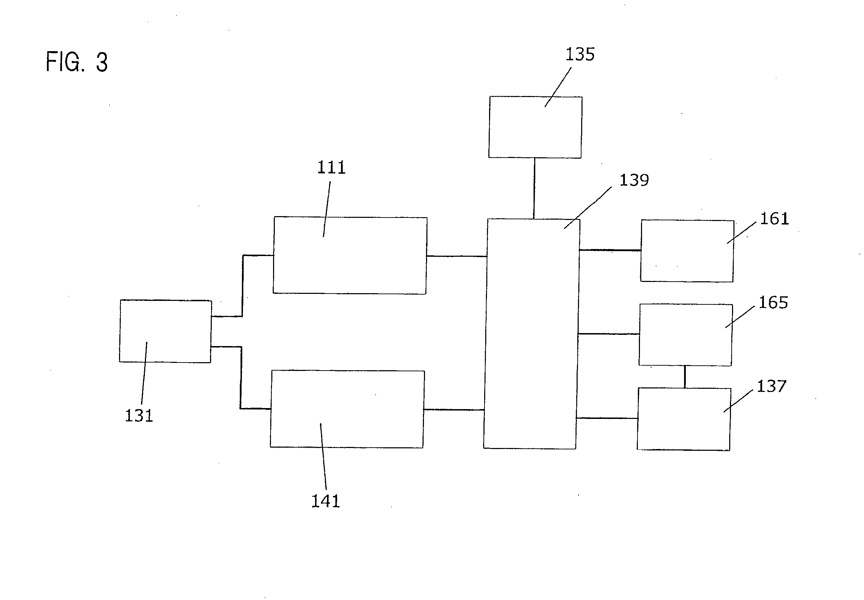

As shown in Fig. 3, the controller 139 is connected to the combustion engine 111, the electric motor 141, the throttle lever 135, the battery pack 137, a LED (light-emitting diode) 161, and a sensor 165 respectively. Further, the sensor 165 is electrically connected to the attached battery pack 137. The controller 139 is one example of a feature corresponding to "a controller" of the invention.

The controller 139 is provided as a control device which controls the combustion engine 111 and the electric motor 141. That is, the controller 139 controls a driving of the electric motor 141 by providing electric current from the battery pack 137 to the electric motor 141. Further, controller 139 controls (adjusts) a mixture ratio of fuel and air for the combustion engine 111 based on a manipulated variable of the throttle lever 135, and thereby the controller 139 adjusts output power (rotation speed) of the combustion engine 111.

Further, the controller 139 controls the electric motor 141 based on a remaining capacity of the battery pack 137 which is detected via the sensor 165. The sensor 165 is always detecting voltage of the battery pack 137. In the controller 139, a first threshold with respect to voltage is set. Further, the controller 139 compares voltage of the battery pack 137 to the first threshold, and controls the electric motor 141 based on voltage of the battery pack 137, that is, based on the remaining capacity of the battery pack 137 detected via the sensor 165. For example, the first threshold may be set to substantially 65 to 75 percent of voltage of the full charge of the battery pack 137. Further, the first threshold may be set to voltage in which the electric motor 141 can start the combustion engine 111 when the starter switch is manipulated. The first threshold is one example of a feature corresponding to "a first threshold" of the invention.

In a state that voltage of the battery pack 137 detected by the sensor 165 is not less than the first threshold, in other words, in a state that higher remaining capacity of the battery pack 137 is detected, the controller 139 controls the electric motor 141 so as to drive the driving shaft 131. Specifically, when the throttle lever 135 is operated, both the engine and the electric motor 141 are driven. When a rotation speed of the crank shaft 123 exceeds a predetermined speed, the centrifugal clutch 151 is actuated, and thereby rotation of the crank shaft 123 is transmitted to the outer rotor 147. Accordingly, the driving shaft 131 is driven both the combustion engine 111 and the electric motor 141. That is, the chain saw 100 drives the saw chain 105 by both output power of the combustion engine 111 and the electric motor 141. The driving shaft 131 is one example of a feature corresponding to "a driving shaft" of the invention. A driving mode in which the electric motor 141 drives the driving shaft 131 in a state that voltage of the battery pack 137 is not less than the first threshold, is one example of a feature corresponding to "a first driving mode" of the invention.

On the other hand, in a state that voltage of the battery pack 137 detected by the sensor 165 is less than the first threshold, in other words, in a state that lower remaining capacity of the battery pack 137 is detected, the controller 139 controls the electric motor 141 so as to be driven by the combustion engine 111. Specifically, when the throttle lever 135 is operated, the combustion engine 111 is driven. When a rotation speed of the crank shaft 123 exceeds the predetermined speed, the centrifugal clutch 151 is actuated, and thereby rotation of the crank shaft 123 is transmitted to the outer rotor 147. Accordingly, the driving shaft 131 is driven by the combustion engine 111 via the outer rotor 147. That is, the chain saw 100 drives the saw chain 105 by output power of only the combustion engine 111. At this time, the electric motor 141 is functioned as a generator by rotation of the outer rotor 147, and electric current is provided to the battery pack 137 from the electric motor 141 functioned as the generator. Therefore, the battery pack 137 is charged. A driving mode in which the electric motor 141 is driven as a generator by the combustion engine 111 in a state that voltage of the battery pack 137 is less than the first threshold, is one example of a feature corresponding to "a second driving mode" of the invention.

Further, in a state that voltage of the battery pack 137 detected by the sensor 165 is less than the first threshold, the controller 139 flickers the LED 161. That is, in a driving mode in which the electric motor 141 does not drive the driving shaft 131, a driving power of the saw chain 105 is reduced. Therefore, the controller 139 flickers the LED 161, and thereby the LED 161 informs a user of a driving state in which the driving power is reduced. On the other hand, in a state that voltage of the battery pack 137 detected by the sensor 165 is not less than the first threshold, the controller 139 does not light the LED 161. Further, with respect to lighting aspects of the LED 161, in a state that the voltage of the battery pack 137 is not less than the first threshold, the controller 139 may light the LED 161, and in a state that voltage of the battery pack 137 is less than the first threshold, the controller 139 may flickers the LED 161. The lighting aspects of light-on, light-off, and flickering may be arbitrarily applied to each driving mode. The LED 161 is one example of a feature corresponding to "an informing mechanism" of the invention.

According to the first embodiment, in a state that the higher remaining capacity of the battery pack 137 (not less than the first threshold) is detected, the electric motor 141 drives the driving shaft 131, and in a state that the lower remaining capacity of the battery pack 137 (less than the first threshold) is detected, the electric motor 141 as a generator charges the battery pack 137. That is, the electric motor 141 which needs electricity is rationally driven based on the remaining capacity of the battery pack 137.

In the first embodiment, in a state that voltage of the battery pack 137 is not less than the first threshold, the electric motor 141 drives the driving shaft 131 (the first driving mode), and the in a state that voltage of the battery pack 137 is less than the first threshold, the electric motor 141 is driven as a generator by the combustion engine 111 (the second driving mode), however it is not limited to such aspect.

### (Second embodiment)

Next, a second embodiment is explained. The second embodiment is substantially similar to the first embodiment, therefore components which is already explained in the first embodiment is omitted to explain. In the first embodiment, the first threshold is set with respect to voltage of the battery pack 137. In addition to the first threshold, a second threshold is further set in the second embodiment. The second threshold is set to a larger value than the first threshold. The controller 139 compares voltage of the battery pack 137 to the first and the second threshold, and controls the electric motor 141. For example, the first threshold is set to substantially 65 to 75 percent of voltage of the full charge of the battery pack 137. Further, the first threshold may be set to voltage in which the electric motor 141 can start the combustion engine 111 when the starter switch is manipulated. Further, for example, the second threshold is be set to substantially 80 to 85 percent of voltage of the full charge of the battery pack 137. The first threshold and the second threshold are one example of features corresponding to "a first threshold" and "a second threshold" of the invention respectively.

In a state that voltage of the battery pack 137 detected by the sensor 165 is not less than the second threshold, the controller 139 controls the electric motor 141 so that the electric motor 141 drives the driving shaft 131. That is, in the chain saw 100, the saw chain 105 is driven by both output power of the combustion engine 111 and the electric motor 131. A driving mode in which the electric motor 141 drives the driving shaft 131 in a state that voltage of the battery pack 137 is not less than the second threshold which is larger than the first threshold, is one example of a feature corresponding to "a first driving mode" of the invention.

Further, in a state that voltage of the battery pack 137 detected by the sensor 165 is less than the first threshold, the controller 139 controls the electric motor 141 so that the electric motor 141 is driven by the combustion engine 111. That is, in the chain saw 100, the saw chain 105 is driven by only output power of the combustion engine 111. At this time, the electric motor 141 is functioned as a generator by rotation of the outer rotor 147, and electric current is provided to the battery pack 137 from the electric motor 141 functioned as the generator. Therefore, the battery pack 137 is charged. A driving mode in which the electric motor 141 is driven as a generator by the combustion engine 111 in a state that voltage of the battery pack 137 is less than the first threshold, is one example of a feature corresponding to "a second driving mode" of the invention.

Further, in a state that voltage of the battery pack 137 detected by the sensor 165 is not less than the first threshold and less than the second threshold, the controller 139 controls the electric motor 141 based on a position of the piston 115 of the combustion engine 111. Accordingly, a sensor (not shown) which detects the position of the piston 115 is provided in the chain saw 100. The controller 139 controls the electric motor 141 so that the electric motor 141 drives the driving shaft 131 in a compression stroke in which the piston 115 moves from the bottom dead point toward the top dead point. In the compression stroke, the electric motor 141 drives the driving shaft 131 and thereby the electric motor 141 assists the driving of the combustion engine 111 which rotates the crank shaft 123 against a sliding friction of the piston 115. Further, as the electric motor 141 is connected to the crank shaft 123, the electric motor 141 is also functioned as a fly wheel.

On the other hand, in a stroke other than the compression stroke, the controller 139 controls the electric motor 141 so that the electric motor 141 is driven by the combustion engine 111. That is, after combustion of mixture air within the cylinder 113, the electric motor 141 is driven as a generator by an inertial force of the piston 115 of the combustion engine 111. Accordingly, electric current generated by the electric motor 141 as the generator is provided to the battery pack 137, and thereby the battery pack 137 is charged. A driving mode in which the electric motor 141 drives the driving shaft 131 in the compression stroke, and further the electric motor 141 is driven as a generator in the stroke other than the compression stroke, is one example of a feature corresponding to "a third driving mode" of the invention.

Further, in a state that voltage of the battery pack 137 detected by the sensor 165 is less than the first threshold, the controller 139 flickers the LED 161. That is, in a driving mode in which the electric motor 141 does not drive the driving shaft 131, a driving power of the saw chain 105 is reduced. Therefore, the controller 139 flickers the LED 161, and thereby the LED 161 informs a user of a driving state in which the driving power of the chain saw 100 is reduced. On the other hand, in a state that voltage of the battery pack 137 detected by the sensor 165 is not less than the first threshold, and less than the second threshold, the controller 139 lights on the LED 161. Accordingly, the LED 161 informs a user of a driving state in which the chain saw 100 is driven by an intermediate driving power. Further, in a state that voltage of the battery pack 137 detected by the sensor 165 is not less than the second threshold, the controller 139 does not light the LED 161. Accordingly, the LED 161 informs a user of a driving state in which the chain saw 100 is driven by the maximum driving power. Further, the lighting aspects of light-on, light-off, and flickering may be arbitrarily applied to each driving mode. The LED 161 is one example of a feature corresponding to "an informing mechanism" of the invention.

According to the second embodiment, in a state that the higher remaining capacity of the battery pack 137 is detected (voltage of the battery pack 137 is not less than the second threshold), the electric motor 141 drives the driving shaft 131, and further in a state that the lower remaining capacity of the battery pack 137 is detected (voltage of the battery pack 137 is less than the first threshold), the electric motor 141 as a generator can charge the battery pack 137. Further, in a state that the intermediate remaining capacity of the battery pack 137 is detected (voltage of the battery pack 137 is not less than the first threshold and less than the second threshold), the electric motor 141 drives only in the compression stroke of the combustion engine 111. Accordingly, output power of the chain saw 100 is changed based on the remaining capacity of the battery pack 137. That is, based on the remaining capacity of the battery pack 137, the electric motor 141 to which electric current is provided is rationally driven.

In the second embodiment, in a state that voltage of the battery pack 137 is not less than the second threshold, the electric motor 141 drives the driving shaft 131 (the first driving mode) , and in a state that voltage of the battery pack 137 is less than the first threshold, the electric motor 141 is driven as a generator by the combustion engine 111 (the second driving mode), and in a state that voltage of the battery pack 137 is not less than the first threshold and less than the second threshold, the controller 139 controls the electric motor 141 based on a position of the piston 115 of the combustion engine 111 (the third driving mode) , however it is not limited to such aspect. The first to third driving modes may be arbitrarily applied to the first and the second threshold.

According to the first and the second embodiments, as the electric motor 141 is driven based on the remaining capacity of the battery pack 137, the chain saw 100 is rationally driven. Especially, in a lower remaining capacity of the battery, the electric motor 141 is able to be driven as a generator so as to charge the battery pack 137.

Further, according to the first and the second embodiments, the LED 161 informs each driving modes. That is, driving power of the chain saw 100 is able to be informed to a user.

Further, according to the first and the second embodiments, the controller 139 is arranged at the lower side portion 107b of the rear handle 107, and thereby the controller 139 is distant from the combustion engine 111 and the electric motor 141 which generate heat. That is, the controller 139 is protected from heat of the combustion engine 111 and/or the electric motor 141. Further, similar to the controller 139, the battery attached portion 107c is arranged at a distal end region of the rear handle 107 which is distant from the combustion engine 111 and the electric motor 141, and thereby the attached battery pack 137 is protected from heat of the combustion engine 111 and/or the electric motor 141. Especially, according to such arrangement of the battery pack 137, the large capacity battery pack 137 which is needed to be protected from heat much more than the controller 139 is effectively protected.

Further, according to the first and the second embodiments, in a state that the electric motor 141 does not drive the driving shaft 131, the electric motor 141 is utilized as a generator. That is, a generator other than the electric motor 141 is not needed to provide to the chain saw 100, and thereby the chain saw 100 is lightened and downsized.

Further, according to the first and the second embodiments, since an outer rotor motor is provided as the electric motor 141, relatively large torque is obtained compared with the same size inner rotor motor. That is, distance (radius) of the electric motor 141 from a center of the rotation to a periphery of the outer rotor 147 is lengthened, and thereby the large torque of the electric motor 141 is obtained. Accordingly, the chain saw 100 is downsized.

In the embodiments described above, lighting aspects of the LED 161 as an informing mechanism correspond to each driving modes, however it is not limited to such aspect. For example, color of light emitted by the LED 161 may be changed according to driving modes. Further, for example, a speaker which outputs sound or an actuator which generates vibration may be provided to the chain saw 100 instead of the LED 161.

Further, in the embodiments, an outer rotor motor is provided as the electric motor 141, however an inner rotor motor may be provided as the electric motor 141. Further, the first threshold and the second threshold with respect to the voltage of the full charge of the battery pack 137 may be arbitrarily changed as needed. For example, the first threshold may be set to a voltage in which the electric motor 141 is unable to drive.

Further, in the embodiments, the chain saw 100 is used to explain as one example of a power tool, however other power tool may be applied to the invention. As long as a power tool has an engine and a motor, for example, a brush cutter, a hammer drill or a circular saw may be applied.

A correspondence relation between each component of the embodiment and the invention is explained as follows. Further, the embodiment is one example to utilize the invention and the invention is not limited to the embodiment.
The chain saw 100 corresponds to "a power tool" of the invention.
The saw chain 105 corresponds to "a tool bit" of the invention.
The combustion engine 111 corresponds to "an engine" of the invention.
The electric motor 141 corresponds to "a motor" of the invention.
The driving shaft 131 corresponds to "a driving shaft" of the invention.
The battery pack 137 corresponds to "a battery" of the invention.
The controller 139 corresponds to "a controller" of the invention.
The LED 161 corresponds to "an informing mechanism" of the invention.
The first threshold corresponds to "a first threshold" of the invention.
The second threshold corresponds to "a second threshold" of the invention.

Having regard to an aspect of the invention, following features are provided:

### (Feature 1)

The power tool according to any one of claims 1 to 5, comprising a main housing which houses the engine and the motor, and a handle which protrudes from the main housing,
wherein the battery is attached to the handle.

### (Feature 2)

The power tool according to any one of claims 1 to 5 and feature 1, wherein the engine is arranged between the motor and a fly wheel in an extending direction of the crank shaft of the engine.

### Description of Numerals:

- 100: chain saw
- 101: main housing
- 103: guide bar
- 105: saw chain
- 106: front handle
- 107: rear handle
- 107a: upper side portion
- 107b: lower side portion
- 107c: battery attached portion
- 108: hand guard
- 110: driving mechanism
- 111: engine
- 113: cylinder
- 115: piston
- 117: spark plug
- 119: crank case
- 121: bearing
- 123: crank shaft
- 125: connecting rod
- 127: fly wheel
- 131: driving shaft
- 133: needle bearing
- 135: throttle lever
- 137: battery pack
- 139: controller
- 141: motor
- 143: stator core
- 143a: sleeve
- 145: stator coil
- 147: outer rotor
- 147a: side wall
- 147b: bottom wall
- 149: magnet
- 151: centrifugal clutch
- 151a: clutch shoe
- 161: LED
- 165: sensor

## Claims

1. A power tool which drives a tool bit, comprising:
an engine,
a motor,
a driving shaft which drives the tool bit,
a battery which provides electric current to the motor, and
a controller which controls a driving of the motor,
wherein both the engine and the motor drive the driving shaft so that the driving shaft drives the tool bit,
and wherein the controller controls the driving of the motor based on a remaining capacity of the battery.

2. The power tool according to claim 1, wherein the controller includes a first driving mode in which the motor drives the driving shaft, and a second driving mode in which the motor functions as a generator and charges the battery as the generator,
and wherein the controller selects from the first driving mode and the second driving mode based on the remaining capacity of the battery, and controls the driving of the motor in the selected driving mode.

3. The power tool according to claim 2, wherein in a state that the remaining capacity of the battery is not less than a first threshold, the controller selects the first driving mode and controls the motor so that the motor drives the driving shaft in the first driving mode,
and in a state that the remaining capacity of the battery is less than the first threshold, the controller selects the second driving mode and controls the motor so that the motor charges the battery in the second driving mode.

4. The power tool according to claim 3, wherein the controller further includes a third driving mode in which the motor drives the driving shaft in a compression stroke in which a piston of the engine moves toward the top dead point in one engine cycle and the motor functions as the generator in other stroke than the compression stroke in one engine cycle,
and wherein in a state that the remaining capacity of the battery is not less than a second threshold which is larger than the first threshold, the controller selects the first driving mode and controls the motor,
and in a state that the remaining capacity of the battery is not less than the first threshold and less than the second threshold, the controller selects the third driving mode and controls the motor.

5. The power tool according to claim 4, further comprising an informing mechanism which informs a driving mode in which the motor is driven, the driving mode being selected from the first to the third driving modes by the controller.
